# EUROPEAN PATENT APPLICATION

(11) **EP 4 848 777 A1**
(43) Date of publication of application: **02.12.2026**
(21) Application number: 24920096.5
(22) Date of filing: 27.12.2024
(51) Int. Cl.: H04W 16/18

(54) **INFORMATION PROCESSING DEVICE**

(30) Priority: 23.01.2024 JP 2024008127
(71) Applicant: Hitachi Construction Machinery Co., Ltd., Tokyo 110-0015 (JP)
(72) Inventor: TAMAKI, Satoshi, Tokyo 100-8280 (JP); ISHII, Hirotake, Tokyo 100-8280 (JP); KIRIMURA, Akiyoshi, Tsuchiura-shi, Ibaraki 300-0013 (JP)
(74) Representative: MERH-IP Matias Erny Reichl Hoffmann Patentanwälte PartG mbB
(86) International application number: PCT/JP2024/046389
(87) International publication number: WO 2025/158873

(57) **Abstract**

An object of the present invention is to provide an information processing device capable of estimating communication quality in a mine with a small computational load and relatively high accuracy. An information processing device according to the present invention includes a storage section that stores terrain information 300 indicating a terrain of a mine, position information indicating a position of a transmitting station that transmits a radio wave, and a radio communication parameter related to radio communication between the transmitting station and a receiving station, and a calculate section that generates a direct-wave power map 312 indicating reception power of a direct radio wave at each point in the mine transmitted from the transmitting station, using the terrain information 300, the position information, and the radio communication parameter. The calculate section corrects the reception power at each point in the direct-wave power map 312 based on a distance difference between a point on the direct-wave power map 312 and one or a plurality of peripheral points around the point, and the reception power at the peripheral points on the direct-wave power map (331)

## Description

### Technical Field

The present invention relates to an information processing device.

### Background Art

There is a demand for connecting mining machines by radio communication for the purpose of automation of mines and the like. Even if the mining machine moves to any position in the mine or even if the terrain of the mine changes due to mining of the mine, it is necessary to maintain radio communication between the mining machine and the base station.

For this purpose, the radio wave propagation state is calculated, and the radio communication quality of each mining machine is estimated, thereby making or correcting the installation plan of the base station.

Patent Literature 1 discloses a technique for improving efficiency by mutually sharing information such that an output of a mining plan is an input of a network plan and an output of the network plan is an input of the mining plan. Patent Literature 1 exemplifies propagation calculation by ray tracing as an example for creating a network plan.

### Citation List

### Patent Literature

Patent Literature 1: JP 2019-509685 A

### Summary of Invention

### Technical Problem

In order to estimate the radio communication quality, it is necessary to calculate how much the received power is attenuated until the radio wave transmitted from the transmitting station reaches the receiving station.

For example, ray tracing is one of methods for calculating propagation attenuation of radio waves. In ray tracing, it is necessary to consider a large number of reflected waves in order to accurately calculate the received power, and a very large calculation amount is required in a case where the entire vast mine is targeted. For this reason, it is difficult to calculate the received power by ray tracing that requires a large calculation amount each time the mine terrain changes due to mining or the mining machine moves. Therefore, it is difficult to calculate the received power following the change in the mine terrain due to mining and the movement of the mining machine.

Therefore, the present invention has been made in view of the above problems, and an object thereof is to provide an information processing device capable of estimating communication quality in a mine with a small computational load and relatively high accuracy.

### Solution to Problem

An information processing device according to the present invention includes a storage section that stores terrain information indicating a terrain of a mine, position information indicating a position of a transmitting station that transmits a radio wave, and a radio communication parameter related to radio communication between the transmitting station and a receiving station that receives the radio wave transmitted by the transmitting station, and a calculate section that generates a direct-wave power map indicating received power of a direct radio wave at each point in the mine transmitted from the transmitting station, using the terrain information, the position information, and the radio communication parameter. The calculate section corrects the received power at each point in the direct-wave power map based on a distance difference between a point on the direct-wave power map and one or a plurality of peripheral points around the point, and the received power at the peripheral points on the direct-wave power map.

### Advantageous Effects of Invention

According to the information processing device of the present invention, it is possible to estimate communication quality in a mine with a small computational load and relatively high accuracy.

### Brief Description of Drawings

Fig. 1 is a schematic view illustrating a mine.
Fig. 2 is a hardware block diagram of an information processing device.
Fig. 3 is a diagram illustrating processing executed by the information processing device of a first embodiment.
Fig. 3A is a diagram illustrating the contents of communication station parameters.
Fig. 3B is a diagram illustrating the contents of a direct-wave power map.
Fig. 3C is a diagram illustrating the contents of a post-correction power map.
Fig. 4 is a conceptual diagram of direct-wave derivation processing.
Fig. 5 is a conceptual diagram illustrating an influence of terrain shielding in direct-wave derivation processing.
Fig. 6 is a conceptual diagram of spatial correlation derivation processing.
Fig. 7 is a conceptual diagram for deriving horizontal spatial correlation information and vertical spatial correlation information.
Fig. 8 is a flowchart illustrating details of spatial correlation correction processing.

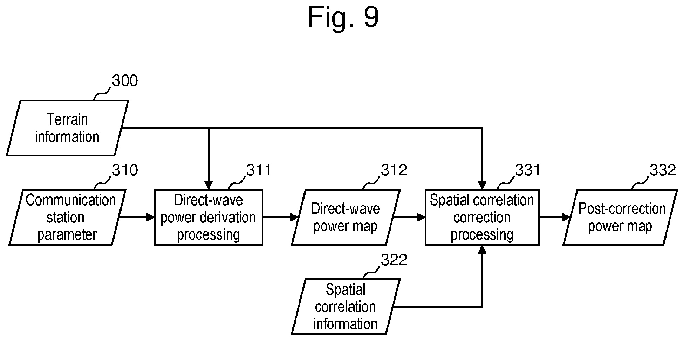

Fig. 9 is a diagram illustrating processing executed by an information processing device of a second embodiment.

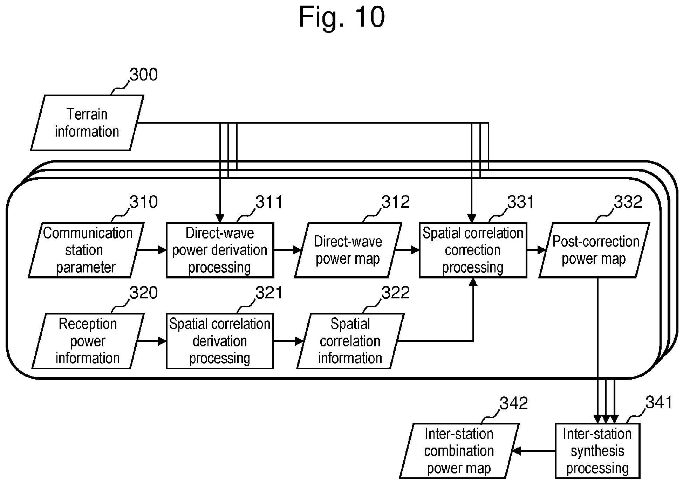

Fig. 10 is a diagram illustrating processing executed by an information processing device of a third embodiment.

### Description of Embodiments

Hereinafter, the present embodiment will be described with reference to the accompanying drawings. In the accompanying drawings, functionally same elements may be denoted by the same numbers. Note that, although the accompanying drawings illustrate embodiments and implementation examples conforming to the principles of the present disclosure, these are for understanding the present disclosure and are not used to interpret the present disclosure in a limited manner. The description herein is merely exemplary and is not intended to limit the scope of the claims or applications of the present disclosure in any way.

In the present embodiment, the description has been made in sufficient detail for those skilled in the art to implement the present disclosure, but it is necessary to understand that other implementations and embodiments are possible, and changes in configurations and structures and replacement of various elements are possible without departing from the scope and spirit of the technical idea of the present disclosure. Therefore, the following description should not be interpreted as being limited thereto.

### (First Embodiment)

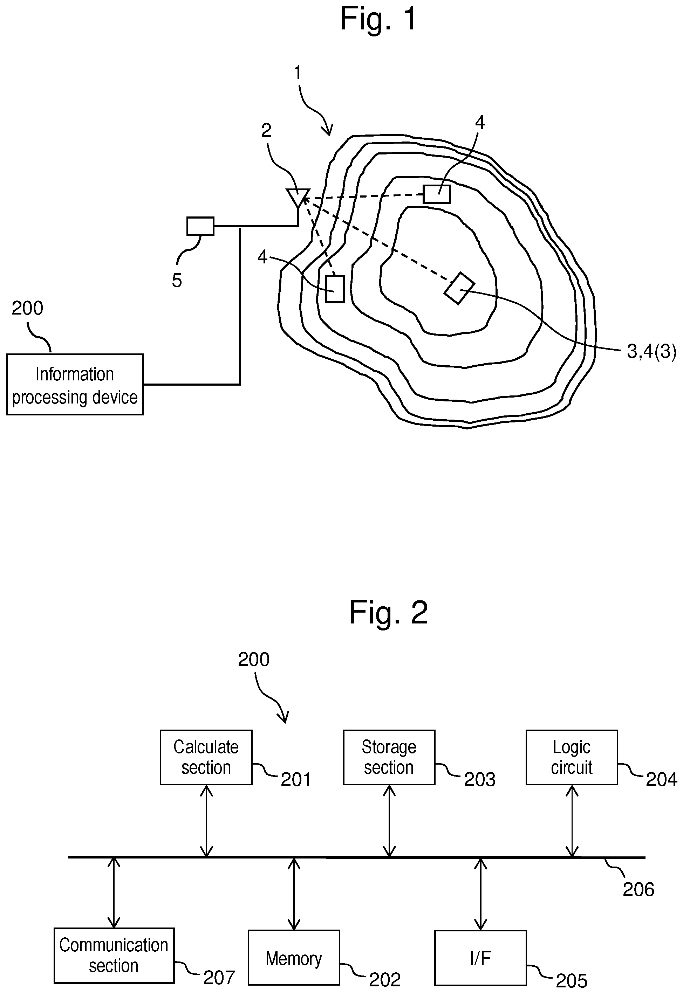

Fig. 1 is a plan view schematically illustrating the entire mine 1. As illustrated in Fig. 1, in the mine 1, various mining machines 4 are operated, such as an excavation machine such as an excavator for mining mineral resources, a transport machine such as a dump truck for transporting the mineral resources excavated by the excavation machine to a smelting facility or the like, and a support vehicle of these machines. In the present embodiment, a case where the mining machine 4 is a transport machine such as a dump truck will be described.

In the mine 1, a control facility 5 provided so as to be able to communicate with the mining machine 4 is provided. The control facility 5 receives various types of information from the mining machine 4, and transmits various commands such as operation commands and management information to the mining machine 4. Although not illustrated, a remote operation device that operates the mining machine 4 from the outside of the mining machine 4 is provided in the control facility 5. Note that the remote operation device may be provided outside the mine 1.

In the mine 1, as a communication device between the mining machine 4 and the control facility 5, a transmitting station 2 that transmits a radio wave from the control facility 5 to the mining machine 4 and receives a radio wave from the mining machine 4 to the control facility 5, and a receiving station 3 that receives a radio wave transmitted from the transmitting station 2 and transmits a radio wave received by the transmitting station 2 are provided.

The transmitting station 2 is, for example, a fixed station, a base station, an access point, an evolved NodeB (eNodeB), or the like. For example, the transmitting station 2 is connected to a remote operation device in the control facility 5 so as to be able to communicate with the remote operation device through a priority or wireless network. The transmitting station 2 transmits a remote operation instruction received from the remote operation device to the mining machine 4. The receiving station 3 is mounted on, for example, the mining machine 4. The mining machine 4 (receiving station 3) receives a remote operation instruction transmitted from the transmitting station 2 and operates in accordance with the remote operation instruction. The receiving station 3 is, for example, a mobile station, a terminal, user equipment (UE), or the like. Note that the mining machine 4 may be an unmanned dump truck or a manned dump truck. Further, the receiving station 3 may be provided outside the mining machine 4.

An information processing device 200 is a device capable of communicating with the transmitting station 2 and the receiving station 3. The information processing device 200 may be installed in the mine 1 or may be installed outside the mine 1. The configuration and operation of the information processing device 200 will be described later.

### (Information Processing Device 200)

The information processing device 200 of the first embodiment creates a power map indicating received power at each point in the mine 1. The information processing device 200 is, for example, a personal computer, a smartphone, a tablet, a cloud server, an on-premises server, or the like. As illustrated in Fig. 2, the information processing device 200 includes a calculate section 201, a memory 202, a storage section 203, a logic circuit 204, an interface 205, a bus 206, and a communication section 207. Hereinafter, the interface is appropriately abbreviated as an I/F. The calculate section 201 is a central processing unit (CPU), a graphics processing unit (GPU), a digital signal processor (DSP), or the like. The memory 202 is a dynamic random access memory (DRAM) or the like, and is used as a work area of the calculate section 201. The storage section 203 is a hard disk drive (HDD), a solid state drive (SSD), a combination thereof, or the like, and stores various programs and various data. The logic circuit 204 is an application specific integrated circuit (ASIC), a field programmable gate array (FPGA), or the like. The interface 205 is a device controller that controls an operation of a peripheral device (keyboard, mouse, display, etc.), a network controller that performs information communication with an external device, or the like.

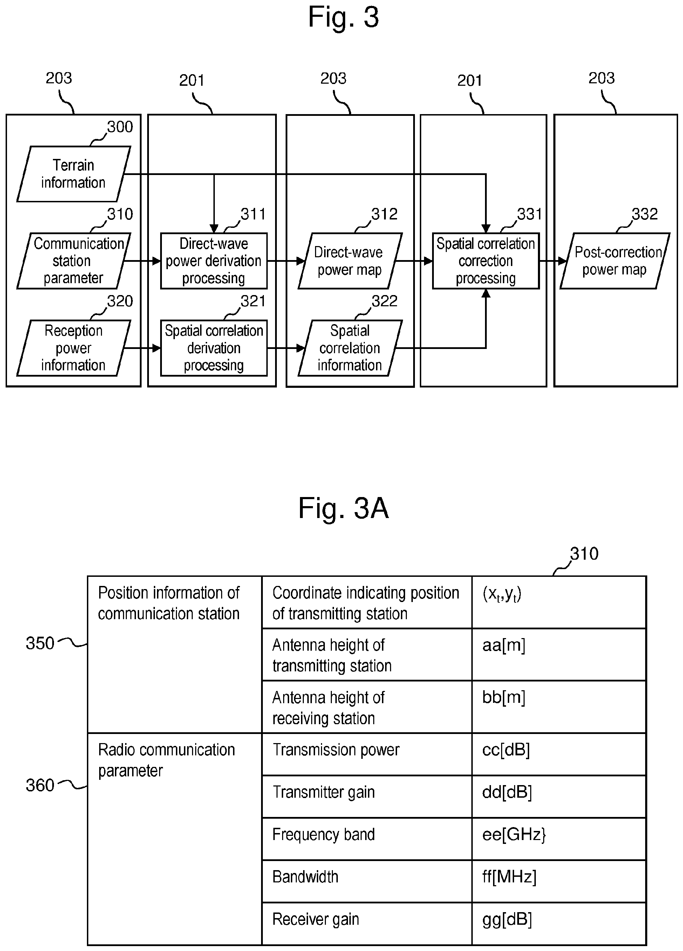

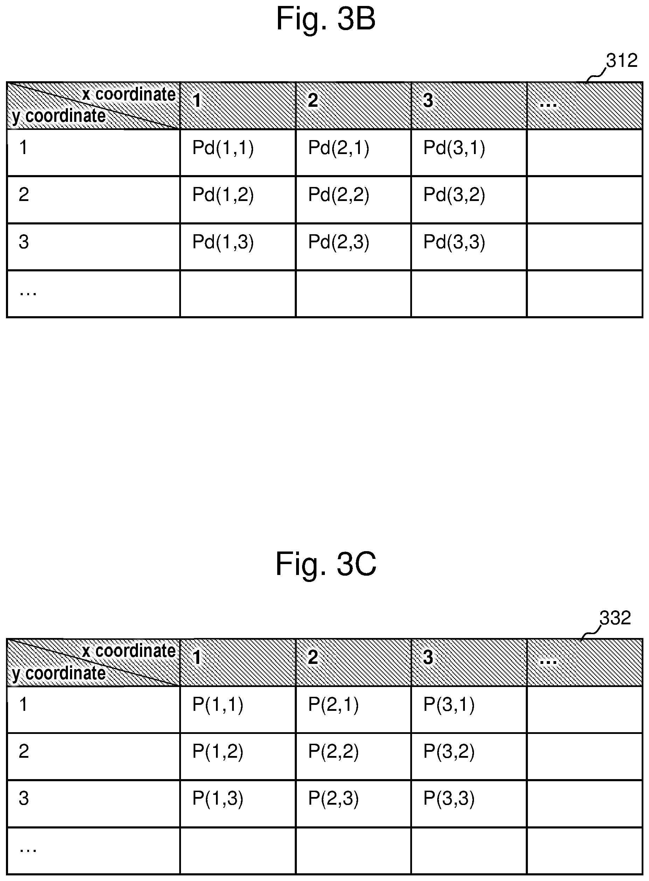

The calculate section 201 or the logic circuit 204 is an example of the arithmetic section of the present invention. The calculate section 201, the logic circuit 204, or a combination thereof executes direct-wave power derivation processing 311, spatial correlation derivation processing 321, and spatial correlation correction processing 331 described with reference to Fig. 3.

The storage section 203 stores terrain information 300, a communication station parameter 310, a direct-wave power map 312, received power information 320, spatial correlation information 322, and a post-correction power map 332 described in Fig. 3.

The communication section 207 transmits and receives data by communicating with a device outside the information processing device 200. For example, in a case where the storage section 203 does not store data such as the terrain information 300, the communication station parameter 310, and the received power information 320 in advance (or in a case where the data is acquired again), these data are received from a data source and stored in the storage section 203.

### (Flow of Radio Communication Quality Estimation Method executed by Information Processing Device 200)

A flow of a radio communication quality estimation method executed by the information processing device 200 of the first embodiment will be described with reference to Fig. 3. A rectangular block in Fig. 3 indicates processing executed by the information processing device 200, and a parallelogram block indicates data stored by the information processing device 200. In the following description of the radio communication quality estimation method, calculation is described on the assumption that each of power, gain, and attenuation is represented by a logarithmic value in dB. Therefore, for example, the addition of power and gain corresponds to multiplication with a true value.

The information processing device 200 executes the direct-wave power derivation processing 311 using the terrain information 300 and the communication station parameter 310.

The terrain information 300 is information indicating the terrain of the mine, and is, for example, digital elevation model (DEM) data including altitude information for each coordinate. The terrain information 300 is created from a detection result by, for example, a Lidar, a Rader, or an optical camera mounted on a drone, an aircraft, or a satellite. The communication section 207 receives the created terrain information 300 and stores the same in the storage section 203. Alternatively, for example, the known terrain information 300 may be stored in the storage section 203 in advance.

As illustrated in Fig. 3A, the communication station parameter 310 includes position information 350 of the transmitting station 2 and the receiving station 3 (the transmitting station 2 and the receiving station 3 are collectively referred to as a communication station) and a radio communication parameter 360 related to radio communication of the communication station. The position information 350 includes coordinates indicating the position of the transmitting station 2, the height of the antenna of the transmitting station 2, the height of the antenna of the receiving station 3, and the like. In the present embodiment, the antenna height of the receiving station 3 corresponds to the height of an antenna when the antenna is mounted on the mining machine 4 (hydraulic excavator or dump truck). The radio communication parameter 360 includes transmission power of a radio wave transmitted by the transmitting station 2, a transmitter gain (including directivity and gain of an antenna of the transmitting station 2), a frequency band, a bandwidth, a receiver gain (including directivity and gain of an antenna of the receiving station 3), and the like. The communication section 207 receives data describing these pieces of information from an appropriate data source as the communication station parameter 310 and stores the data in the storage section 203. Alternatively, known information may be stored in the storage section 203 in advance as the communication station parameter 310.

The direct-wave power derivation processing 311 generates the direct-wave power map 312. The direct-wave power map 312 indicates received power at each point in the mine 1 of the direct wave of the radio wave transmitted from the transmitting station 2. That is, the direct-wave power map 312 indicates the power of the direct wave received when the receiving station 3 is present at the coordinates. As illustrated in Fig. 3B, the direct-wave power map 312 is data in which direct-wave power (Pd(x, y)) is associated with coordinates of each point in the mine 1.

Furthermore, the information processing device 200 executes the spatial correlation derivation processing 321 using the received power information 320.

The received power information 320 is, for example, a received power value for each coordinate actually measured by the mining machine 4 (dump truck) traveling in the mine 1 as the receiving station 3. For example, the communication section 207 communicates with the mining machine 4 to receive the measured value from the mining machine 4, and stores the value in the storage section 203 as the received power information 320.

The spatial correlation derivation processing 321 generates the spatial correlation information 322. The spatial correlation information 322 is information in which a relative distance between two points in the mine 1 and a power difference caused by the relative distance correspond to each other. The larger the value, that is, the larger the power difference, the smaller the correlation. The spatial correlation information 322 may be one value for the entire mine 1, or different values may be set for a plurality of areas in the mine 1. The plurality of areas may be areas divided in a fixed distance range such as 1 km × 1 km, or may be areas for each attribute of an area such as a mining area or a conveyance path area.

Then, the information processing device 200 executes the spatial correlation correction processing 331 using the terrain information 300, the direct-wave power map 312, and the spatial correlation information 322.

The post-correction power map 332 is created by the spatial correlation correction processing 331. The post-correction power map 332 indicates received power of radio wave transmitted from the transmitting station 2 at each point in the mine 1. That is, the post-correction power map 332 indicates power received when the receiving station 3 is present at the coordinates. As illustrated in Fig. 3C, the post-correction power map 332 is data in which corrected received power (P(x, y)) is associated with coordinates of each point in the mine 1.

### (Direct-Wave Power Derivation Processing 311)

In the direct-wave power derivation processing 311, the direct-wave power map 312 indicating the received power of the radio wave transmitted from the transmitting station 2 at each point in the mine is created using the terrain information 300 and the communication station parameter 310. Hereinafter, when power is expressed in logarithm, received power (direct-wave power) at each point is calculated by the following Expression. 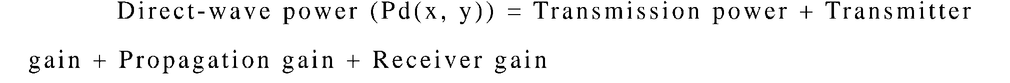 Direct-wave power (Pd(x, y)) = Transmission power + Transmitter gain + Propagation gain + Receiver gain

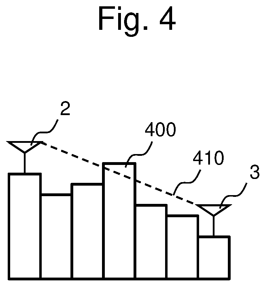

Each of the transmitter gain and the receiver gain includes the gain of the antenna of the transmitting station 2 and the gain of the antenna of the receiving station 3. In addition, the propagation gain is a value obtained by adding a terrain shielding gain to distance attenuation × (-1) obtained by the distance between the transmitting station 2 and the receiving station 3. The distance attenuation is, for example, the square attenuation of the distance according to the friis formula. As illustrated in Fig. 4, the terrain shielding gain is a value determined by shielding with a shielding object 400 between the transmitting station 2 and the receiving station 3. For example, in a case where the shielding object 400 exists on a straight line 410 connecting the antenna of the transmitting station 2 and the antenna of the receiving station 3 by a straight line, the terrain shielding gain is considered.

### (Relationship between terrain shielding and its gain in direct-wave power derivation processing)

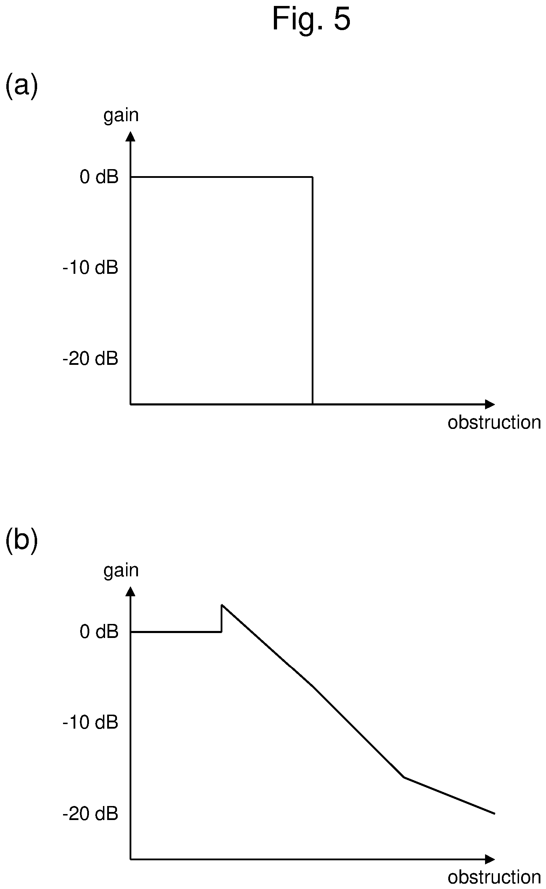

Fig. 5 is a diagram illustrating a relationship between terrain shielding and its gain in the direct-wave power derivation processing of Fig. 4. The horizontal axis of each graph in Fig. 5 is a parameter indicating how much the shielding object 400 shields the line of sight between the transmitting station 2 and the receiving station 3, and the vertical axis is the gain at the time of shielding by the shielding object 400.

As illustrated in Fig. 5(a), the radio wave is regarded as a single ray, and the gain may be set to 0 when the shielding by the shielding object 400 is equal to or less than a certain degree, and the gain may be set to -infinity when the shielding is equal to or more than a certain degree.

In addition, as illustrated in Fig. 5(b), assuming that the radio wave has a certain extent, the gain may be reduced according to the degree of shielding by the shielding object 400. As an example, knife edge diffraction or a relationship of an approximate expression thereof may be used.

Note that, regarding the shielding object 400, calculation may be performed only for the shielding object 400 having the largest degree of shielding between the transmitting station 2 and the receiving station 3, approximation such as Bullington Method in which a plurality of shielding objects 400 are combined and treated as a single obstacle may be used, or gain may be calculated as synthesis of diffraction by the plurality of shielding objects 400.

Here, the shielding object 400 includes, for example, the terrain in the mine and the mining machine 4 itself. Therefore, the shielding object 400 that shields between the transmitting station 2 and the receiving station 3 can change with the lapse of time.

### (Spatial Correlation Derivation Processing 321)

In the spatial correlation derivation processing 321, the spatial correlation information 322 in which a relative distance between two points in the mine 1 and a power difference caused by the relative distance correspond to each other is derived.

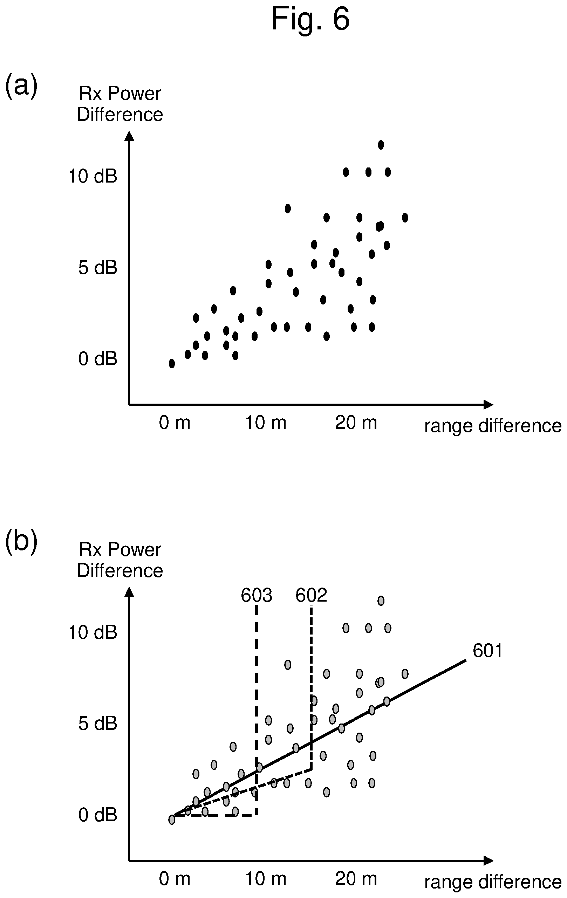

In the first embodiment, when received power (received power information 320) and information related thereto are acquired by the receiving station 3 mounted on the mining machine 4 traveling in the mine 1, the spatial correlation information 322 is derived using a point where the received power is actually measured and an actual measurement value thereof. Fig. 6(a) is a diagram illustrating a relationship between a distance difference (horizontal axis) of coordinates between two points where received power is acquired and an absolute value (vertical axis) of the power difference, for a plurality of received power acquired by the receiving station 3.

The spatial correlation information 322 such as 601, 602, and 603 illustrated in Fig. 6(b) is created based on the relationship of Fig. 6(a).

The spatial correlation information 322 may be, for example, the spatial correlation information 601 of a straight line passing through a power difference = 0 dB and a distance difference = 0 m and having an inclination, or may be the spatial correlation information 602 that is a straight line having an inclination similarly to the spatial correlation information 601 when the distance difference is within a certain value but is terminated when the distance difference is equal to or larger than a certain value. Alternatively, the spatial correlation information 603 may be fixed at 0 dB when the distance difference is within a certain value and terminated when the distance difference is a certain value or more. The value of the spatial correlation information is a power value in dB.

For the inclination of the spatial correlation information 601 or 602, an inclination with the minimum square error may be selected, a value obtained by multiplying the inclination with the minimum square error by a certain constant such as 0.5 may be selected, or the inclination may be selected under a condition that the number of data points below the straight line among all the data points is equal to or less than a certain ratio (for example, 80% or less).

As the terminating threshold of the spatial correlation information 602 or 603, for example, the inclination is obtained by the same rule as the derivation of the inclination of the spatial correlation information 601 or 602 described above, and it is possible to select a distance difference in which the product of the inclination and the distance difference is equal to or greater than a certain value such as 5 dB. The termination threshold may be a fixed value (for example, 10 m or the like), or a smaller value of a product of the inclination and the distance difference and the fixed value may be selected.

### (Horizontal Spatial Correlation Information, and Vertical Spatial Correlation Information)

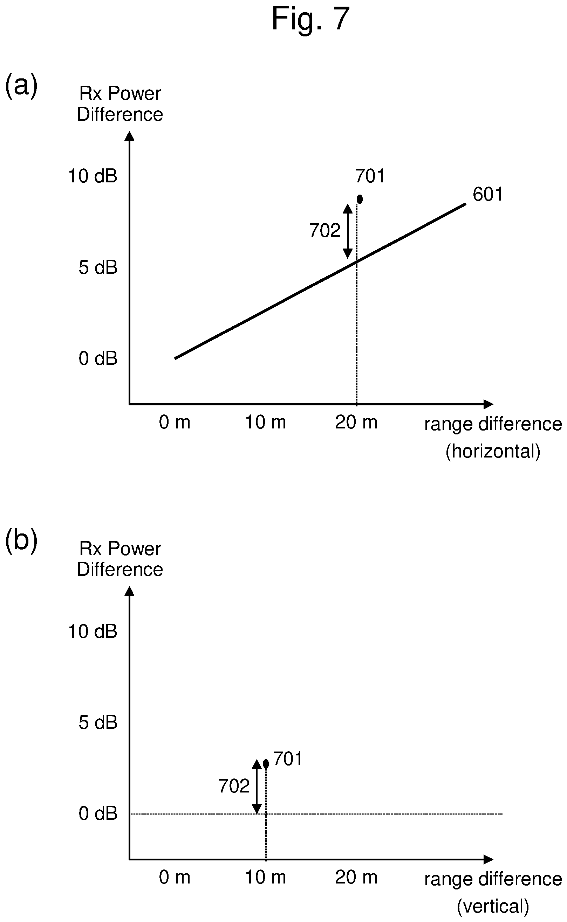

Note that the distance difference in Fig. 6 may be separated into a distance difference in the horizontal direction and a distance difference in the vertical (altitude) direction. Fig. 7 is a conceptual diagram of the spatial correlation derivation processing 321 in a case where the distance difference of Fig. 6 is separated in the horizontal direction and the vertical direction.

As illustrated in Fig. 7(a), for example, only the horizontal distance difference is considered on the horizontal axis, and the spatial correlation information 601 is derived similarly to the method of deriving the spatial correlation information of Fig. 6, and the horizontal spatial correlation information (horizontal spatial correlation information) is derived. Next, for example, for a point 701 having a horizontal distance of 20 m and a vertical distance of 10 m, a power difference 702 from the spatial correlation information 601 corresponding to the horizontal distance of 20 m is acquired. Then, a relationship (b) in which the power difference 702 corresponds to the vertical distance on the horizontal axis is acquired. For example, the horizontal axis represents the vertical distance of 10 m, and the vertical axis represents the value of the power difference 702. In this manner, the relationship between the vertical distance and the power difference is derived for each point, and spatial correlation information corresponding to 601, 602, and 603 in Fig. 6 is created using this relationship, and spatial correlation information in the vertical direction is created.

When the relationship between the vertical distance and the received power difference is created, in a case where the power difference becomes negative in the process of the derivation or in a case where the horizontal distance difference is larger than the termination threshold of the horizontal spatial correlation information, this case is not included in the relationship between the vertical distance and the power difference.

### (Spatial Correlation Correction Processing 331)

In the spatial correlation correction processing 331, the value (received power) at each point (each coordinate) on the direct-wave power map 312 is smoothed using the value (received power) in the peripheral coordinates to create the post-correction power map 332. At this time, a distance difference between each point and peripheral coordinates is derived using the terrain information 300, and smoothing is performed based on the spatial correlation information 322 so as to be strongly affected by direct-wave power of coordinates having a small power difference corresponding to the derived distance difference.

### (Details of Spatial Correlation Correction Processing)

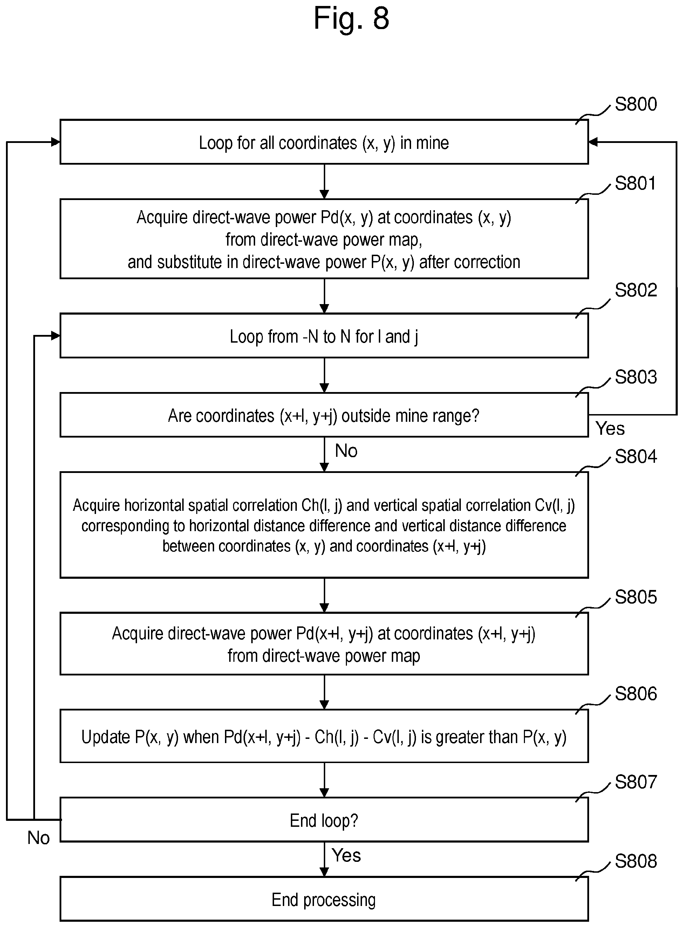

Fig. 8 is a flowchart illustrating details of the spatial correlation correction processing. Each step of the flowchart of Fig. 8 may be executed by the calculate section 201 of the information processing device 200 executing a program, or may be executed by the logic circuit 204.

The information processing device 200 executes the following processing of S801 to S806 for all the coordinates (x, y) in the mine 1 (S800).

The information processing device 200 acquires the direct-wave power Pd(x, y) at the coordinates (x, y) from the direct-wave power map 312, and substitutes the direct-wave power into the corrected received power P(x, y) (S801).

Next, the information processing device 200 performs loop processing from -N to N for the variables l and j (S802). In this flowchart, the loop processing is performed from -N to N for the variables l and j, but the loop processing may be performed from -N1 to N1 for the variable l, and the loop processing may be performed from -N2 to N2 for the variable j.

The information processing device 200 determines whether coordinates (x+l, y+j) of a peripheral point of the coordinates (x, y) are outside the range of the mine 1 (S803). When the information processing device 200 determines that the coordinates (x+l, y+j) of the peripheral point are out of the range of the mine 1 (S803: Yes), the process returns to S800. On the other hand, when determining that the coordinates (x+l, y+j) of the peripheral point are within the range of the mine 1 (S803: No), the information processing device 200 executes the processing of S804.

The information processing device 200 calculates a horizontal distance difference and a vertical distance difference between the coordinates (x, y) of the target point and the coordinates (x+l, y+j) of the peripheral point. Then, the information processing device 200 uses the horizontal spatial correlation information to acquire the horizontal spatial correlation Ch(l, j) (horizontal power difference) corresponding to the calculated horizontal distance difference, and uses the vertical spatial correlation information to acquire the vertical spatial correlation Cv(l, j) (vertical power difference) corresponding to the calculated vertical distance difference (S804).

Furthermore, the information processing device 200 acquires direct-wave power Pd(x+l, y+j) at coordinates (x+l, y+j) from the direct-wave power map 312 (S805).

The information processing device 200 calculates corrected received power (Pd(x+l, y+j) - Ch(l, j) - Cv(l, j)) using the horizontal spatial correlation Ch(l, j) and the vertical spatial correlation Cv(l, j) acquired in S804 and the direct-wave power Pd(x+l, y+j) acquired in S805. Then, the calculated corrected received power (Pd(x+l, y+j) - Ch(l, j) - Cv(l, j)) is compared with the corrected received power P(x, y) substituted in S801. As a result of the comparison, when the corrected received power (Pd(x+l, y+j) - Ch(l, j) - Cv(l, j)) is larger than P(x, y), the corrected received power P(x, y) is updated to Pd(x+l, y+j) - Ch(l, j) - Cv(l, j) (S806). Note that P, Pd, Ch, and Cv are values in dB, and addition/subtraction is performed in dB as it is.

The information processing device 200 determines whether the loop processing has ended (S807), and in a case where it is determined that the loop processing from -N to N has not been completed for the variables l and j described above, the process returns to S802, and the processing of S803 to S806 is executed for the coordinates (x+l, y+j) of the next peripheral point.

In a case where it is determined that the loop processing from -N to N has been completed for the variables l and j described above, and it is determined that the spatial correlation correction processing has not been completed for all the coordinates (x, y) in the mine 1, the information processing device 200 returns to S801 and executes the processing of S801 to S806 for the next coordinates (x, y).

In a case where it is determined that the spatial correlation correction processing has been completed for all the coordinates (x, y) in the mine 1, the information processing device 200 ends this flowchart (S808).

Note that the order of each processing illustrated in the flowchart of Fig. 8 may be different from the order of the processing of the flowchart of Fig. 8 as long as the final result is the same.

### (Effects of First Embodiment)

In the first embodiment, the post-correction power map 332 can be obtained using the direct-wave power map 312 that can be calculated with a smaller computational load than ray tracing in which many reflected waves are taken into consideration. Furthermore, in the first embodiment, by using the spatial correlation information 322 instead of the calculation for the reflected wave, it is possible to obtain the post-correction power map 332 with relatively high accuracy as compared with the direct-wave power map 312 although the accuracy is not high enough to consider many reflected waves. Therefore, in the first embodiment, the communication quality in the mine 1 can be estimated with a small computational load and relatively high accuracy.

Furthermore, in the first embodiment, by correcting the direct-wave power map 312 using the spatial correlation information 322 in a case where the condition of S806 is satisfied, there is a possibility that a point having no arrival radio wave or a point having a low received power level becomes a point having an arrival radio wave or a point having a high received power level in the direct-wave power map 312. By comparing the direct-wave power map 312 before correction and the post-correction power map 332 after correction on a display or the like, it is possible to grasp a radio wave condition in an area that cannot be grasped only by the direct-wave power map 312.

By the estimation of the communication quality described above, the network plan of the mine 1 can be easily prepared and corrected, and the communication quality in the mine 1 can be estimated following the change in the terrain of the mine 1 and the movement of the mining machine that changes from moment to moment.

Furthermore, in a mine having a vast area range such as an open-pit mine, a method of estimating the communication quality in the mine 1 with a small computational load and relatively high accuracy is effective.

### (Second Embodiment)

In the first embodiment, a vehicle or the like equipped with a receiving station is caused to travel in the mine 1 in order to acquire the spatial correlation information 322, but the present invention is not limited thereto. The spatial correlation information 322 of a second embodiment may be, for example, a fixed relationship with reference to a value used in another mine.

Furthermore, the spatial correlation information 322 having a fixed relationship may be used as the initial value as in the second embodiment, and then the spatial correlation information 322 may be changed to be derived as in the spatial correlation derivation processing 321 as in the first embodiment.

### (Effect of Second Embodiment)

In the second embodiment, since the spatial correlation information 322 used in another mine can be used, it is not necessary to cause a vehicle or the like equipped with a receiving station to travel in the mine 1 as in the first embodiment. For example, by using the spatial correlation information 322 of mines having similar shapes and the like, the direct-wave power map 312 can be corrected with high accuracy. Other effects are the same as those of the first embodiment.

### (Third Embodiment)

When there are a plurality of transmitting stations 2 in the mine 1, processing corresponding to the first and second embodiments is performed for each transmitting station 2.

In the third embodiment, the post-correction power map 332 is created for each of the plurality of transmitting stations 2. Then, an inter-station combination power map 342 corresponding to the communication quality at the time of using the plurality of transmitting stations 2 is created using the plurality of post-correction power maps 332 by inter-station combination processing 341.

In the inter-station combination processing 341, for example, a fixed station having the largest received power is selected for each coordinate and is set as a connected fixed station, a signal-to-interference power ratio is estimated assuming that a transmission signal of a fixed station other than the connected fixed station interferes with a signal from the connected fixed station, and the signal-to-interference power ratio is set as an inter-station combination power map.

### (Effect of Third Embodiment)

In the third embodiment, by creating the inter-station combination power map 342, it is possible to estimate the communication quality in the mine with relatively high accuracy even when there are a plurality of transmitting stations 2. Other effects are the same as those of the first embodiment.

Note that the present invention is not limited to the above embodiments, and includes various modified examples. For example, the above-described embodiments have been described in detail for easy understanding of the present invention, and the present invention is not necessarily limited to those having all the described configurations. Further, a part of a configuration of one embodiment can be replaced with a configuration of another embodiment, and a configuration of an embodiment can be added to a configuration of another embodiment. In addition, it is possible to perform addition, deletion, and replacement of other configurations for a part of a configuration of each embodiment. In addition, some or all of the above configurations, functions, processing sections, processing means, or the like may be implemented by hardware, for example, by being designed as an integrated circuit or the like. In addition, each of the above configurations, functions, and the like may be implemented by software by a processor interpreting and executing a program for implementing each function.

For example, in the first embodiment, the horizontal spatial correlation Ch(l, j) and the vertical spatial correlation Cv(l, j) are acquired in S804 of Fig. 8, and the corrected received power P(x, y) is calculated using the horizontal spatial correlation Ch(l, j) and the vertical spatial correlation Cv(l, j) in S806. The present invention is not limited thereto, and the spatial correlation may be acquired from the three-dimensional distance difference using any one of 601 to 603 in Fig. 6, and the corrected received power P(x, y) may be calculated using the spatial correlation.

Note that the transmitting station 2 and the receiving station 3 of the first to third embodiments described above may be transmitting and receiving stations that transmit and receive radio waves.

An information processing device according to the present invention includes
a storage section that stores terrain information indicating a terrain of a mine, position information indicating a position of a transmitting station that transmits a radio wave, position information of a receiving station that is configured to be mounted on a mining machine operating in the mine and receives the radio wave transmitted from the transmitting station, and a radio communication parameter related to radio communication between the transmitting station and the receiving station, and
an calculate section that calculates received power of a direct wave at each point in the mine among radio waves transmitted from the transmitting station by using the terrain information, the position information of the transmitting station, and the radio communication parameter, and generates a direct-wave power map indicating a distribution of the received power at each point based on a calculated value, in which
when information on an actual measurement value of the received power of a direct wave when the receiving station mounted on the mining machine receives the direct wave from the transmitting station is newly acquired, the calculate section corrects the received power at each point on the direct-wave power map based on a first point at which the received power on the direct-wave power map is calculated and a calculated value thereof, a second point at which the received power is actually measured and an actual measurement value thereof, and a relative distance between the first point and the second point.

According to the information processing device according to the present invention, it is possible to estimate communication quality in a mine with a small computational load and relatively high accuracy. Specifically, the post-correction power map 332 can be obtained using the direct-wave power map 312 that can be calculated with a smaller computational load than ray tracing in which many reflected waves are taken into consideration. Therefore, the communication quality in the mine 1 can be estimated with a small computational load and relatively high accuracy.

### Reference Signs List

- 1: Mine
- 2: Transmitting station
- 3: Receiving station
- 4: Mining machine
- 5: Control facility
- 200: Information processing device
- 201: Calculate section
- 202: Memory
- 203: Storage section
- 204: Logic circuit
- 205: Interface
- 206: Bus
- 300: Terrain information
- 310: Communication station parameter
- 311: Direct-wave power derivation processing
- 312: Direct-wave power map
- 320: received power information
- 321: Spatial correlation derivation processing
- 322: Spatial correlation information
- 331: Spatial correlation correction processing
- 332: Post-correction power map
- 341: Inter-station synthesis processing
- 342: Inter-station combination power map
- 350: Position information of communication station
- 360: Radio communication parameter

## Claims

1. An information processing device, comprising:
a storage section that stores terrain information indicating a terrain of a mine, position information indicating a position of a transmitting station that transmits a radio wave, position information of a receiving station that is configured to be mounted on a mining machine operating in the mine and receives the radio wave transmitted from the transmitting station, and a radio communication parameter related to radio communication between the transmitting station and the receiving station; and
a caluculate section that calculates receivedpower of a direct wave at each point in the mine among radio waves transmitted from the transmitting station by using the terrain information, the position information of the transmitting station, and the radio communication parameter, and generates a direct-wave power map indicating a distribution of the received power at each point based on a calculated value, wherein
when information on an actual measurement value of the received power of a direct wave when the receiving station mounted on the mining machine receives the direct wave from the transmitting station is newly acquired, the calculate section corrects the received power at each point on the direct-wave power map based on a first point at which the received power on the direct-wave power map is calculated and a calculated value thereof, a second point at which the received power is actually measured and an actual measurement value thereof, and a relative distance between the first point and the second point.

2. The information processing device according to claim 1, wherein
the storage section stores spatial correlation information in which a relative distance between two points in the mine and a power difference caused by the relative distance correspond to each other, and
the calculate section is configured to execute:
acquiring a power difference caused by a relative distance between the first point and the second point by using the spatial correlation information; and
correcting received power at each point on the direct-wave power map based on the received power at the second point on the direct-wave power map and the acquired power difference.

3. The information processing device according to claim 2, wherein
the spatial correlation information includes horizontal spatial correlation information in which a horizontal relative distance between two points in the mine in a horizontal direction and a power difference caused by the horizontal relative distance correspond to each other, and vertical spatial correlation information in which a vertical relative distance between two points in the mine in a vertical direction and a power difference caused by the vertical relative distance correspond to each other, and
the calculate section is configured to execute:
acquiring a horizontal power difference corresponding to a horizontal relative distance between the first point and the second point on the direct-wave power map using the horizontal spatial correlation information, and acquiring a vertical power difference corresponding to a vertical relative distance between the first point and the second point on the direct-wave power map using the vertical spatial correlation information; and
correcting received power at each point on the direct-wave power map based on the received power at the second point on the direct-wave power map, the horizontal power difference, and the vertical power difference.

4. The information processing device according to claim 2, wherein
the spatial correlation information is one piece of information set for the mine or information set for each of a plurality of areas in the mine.

5. The information processing device according to claim 4, wherein
the plurality of areas are a plurality of areas obtained by dividing the mine by a fixed distance range, or are areas for each attribute of the mine.

6. The information processing device according to claim 2, wherein
the spatial correlation information is generated based on actually measured received power received from the transmitting station by a mobile station moving in the mine.

7. The information processing device according to claim 2, wherein
the spatial correlation information is spatial correlation information of another mine different from the mine.

8. The information processing device according to claim 1, wherein
when a plurality of transmitting stations are provided in the mine, the calculate section generates a post-correction power map in which received power at each point on the direct-wave power map is corrected for each of the plurality of transmitting stations, and generates a combination power map using the post-correction power map for each of the plurality of transmitting stations.

9. The information processing device according to claim 2, wherein
when corrected received power calculated using the received power at the second point on the direct-wave power map and the acquired power difference is larger than received power at the first point on the direct-wave power map, the calculate section corrects the received power at the first point on the direct-wave power map to the corrected received power.
